**Europäisches Patentamt**

**European Patent Office**

**Office européen des brevets**

(19)

(11) Veröffentlichungsnummer : **0 338 246 B1**

## (12) EUROPÄISCHE PATENTSCHRIFT

(45) Veröffentlichungstag der Patentschrift :
**20.05.92 Patentblatt 92/21**

(51) Int. Cl.$^5$ : **F16L 3/08**

(21) Anmeldenummer : **89104503.1**

(22) Anmeldetag : **14.03.89**

(54) **Gummielastische Einlage für eine Rohrhalterungsschelle.**

(30) Priorität : **20.04.88 DE 3813191**

(43) Veröffentlichungstag der Anmeldung :
**25.10.89 Patentblatt 89/43**

(45) Bekanntmachung des Hinweises auf die
Patenterteilung :
**20.05.92 Patentblatt 92/21**

(84) Benannte Vertragsstaaten :
**ES FR GB GR IT NL SE**

(56) Entgegenhaltungen :
**DD-A- 68 111**
**DE-U- 1 987 450**
**DE-U- 6 935 864**
**FR-A- 2 457 403**

(73) Patentinhaber : **Rasmussen GmbH**
**Edisonstrasse 4**
**W-6457 Maintal 3 (DE)**

(72) Erfinder : **Geppert, Helmut**
**Hauptstrasse 75**
**W-8757 Karlstein (DE)**

(74) Vertreter : **Knoblauch, Ulrich, Dr.-Ing.**
**Kühhornshofweg 10**
**W-6000 Frankfurt am Main 1 (DE)**

## Beschreibung

Die Erfindung bezieht sich auf eine Rohrhalterungsschelle mit einer gummielastischen Einlage aus wärmedämmendem Material, wobei die Einlage auf ihrer der Rohrhalterungsschelle in der Einbaulage abgekehrten Innenseite axial durchgehende Nuten aufweist, deren Tiefe wenigstens einem Drittel der Dicke der Einlage entspricht.

Herkömmliche beiderseits glatte Gummieinlagen, sogenannte "Gummiprofile", von Rohrhalterungsschellen haben häufig einen zu geringen Wärmedurchgangswiderstand, um sie unmittelbar auf einem Rohr anzubringen, das beiderseits der Rohrhalterungsschelle mit wärmedämmendem Material verkleidet ist, und zu verhindern, daß ein in dem Rohr strömendes heißes oder unterkühltes Fluid durch die Rohrwand und die Rohrhalterungsschelle hindurch abgekühlt bzw. erwärmt wird.

Aus der DE-U-19 87 450 ist eine Rohrhalterungsschelle mit einer Gummieinlage nach dem Oberbegriff des Patentanspruchs bekannt, bei der die zwischen den axialen Nuten liegenden Rippen zur Erhöhung der Geräuschisolierung dienen. Wenn das Rohr bis an die radialen Stirnflächen der Einlage mit wärmedämmendem Material verkleidet würde, könnte dennoch erwärmte Luft aus den Nuten axial und durch einen radialen Spalt zwischen der Einlage und dem wärmedämmenden Material entweichen, der insbesondere bei einer Wärmedehnung des Rohres auftreten würde. Die dadurch entstehende Kältebrücke ist unerwünscht.

Aus der DE-U-69 35 864 ist eine Einlage aus Gummi oder Kunststoff bekannt, die in einem mittleren Bereich ihrer Innenseite mit spitzen Noppen zur Geräuschisolierung versehen ist und deren stirnseitige Ränder sich verjüngend axial über die stirnseiten Ränder der Halterungsschelle vorstehen, um das Eindringen und Ansetzen von Schmutz auf den Stirnseiten der Schelle bzw. Einlage zu verhindern. In der DE-U-69 35 864 wird auch auf bekannte Einlagen aus Filz, Gummi oder Kork verwiesen.

Der Erfindung liegt die Aufgabe zugrunde, eine Rohrhalterungsschelle mit einer Einlage nach dem Oberbegriff des Patentanspruchs anzugeben, die eine bessere Wärmedämmung des Rohres an den Stirnseiten der Rohrhalterungsschelle auch dann sicherstellt, wenn sie für ein Rohr verwendet wird, das auf beiden Stirnseiten der Rohrhalterungsschelle mit wärmedämmendem Material verkleidet ist.

Erfindungsgemäß ist diese Aufgabe dadurch gelöst, daß die Einlage breiter als die Rohrhalterungsschelle ist, daß die Dicke von in der Einbaulage axial außerhalb des Randes der Rohrhalterungsschelle liegenden Randabschnitten der Einlage in der Einbaulage zu den Umfangsrändern der Einlage hin und radial nach innen abnimmt und daß das Material der Einlage ein Gemisch aus Kork und Gummi aufweist.

Bei dieser Lösung haben die sich axial verjüngenden Randabschnitte der Einlage den Vorteil, daß ein angrenzendes wärmedämmendes Material, das ein mittels der Schelle gehaltertes Rohr umgibt, diese Randabschnitte axial überlappen kann, so daß auch für eine gute Abdichtung der Grenzfläche zwischen der Einlage und dem angrenzenden wärmedämmenden Material des Rohres gesorgt ist. Das Gemisch aus Kork und Gummi hat eine besonders niedrige Wärmeleitfähigkeit und ist dennoch hinreichend elastisch.

Die Erfindung und ihre Weiterbildungen werden nachstehend anhand der Zeichnung eines bevorzugten Ausführungsbeispiels näher beschrieben. Es zeigen:

Fig. 1 eine Axialansicht einer Rohrhalterungsschelle mit einer erfindungsgemäßen gummielastischen Einlage,

Fig. 2 eine Seitenansicht der Rohrhalterungsschelle nach Fig. 1,

Fig. 3 den Schnitte A-A der Fig. 1 und

Fig. 4 eine Seitenansicht der Einlage der Rohrhalterungsschelle nach den Fig. 1 bis 3 in langgestreckter form, d.h. vor dem Biegen in eine Kreis- oder Teilkreisform.

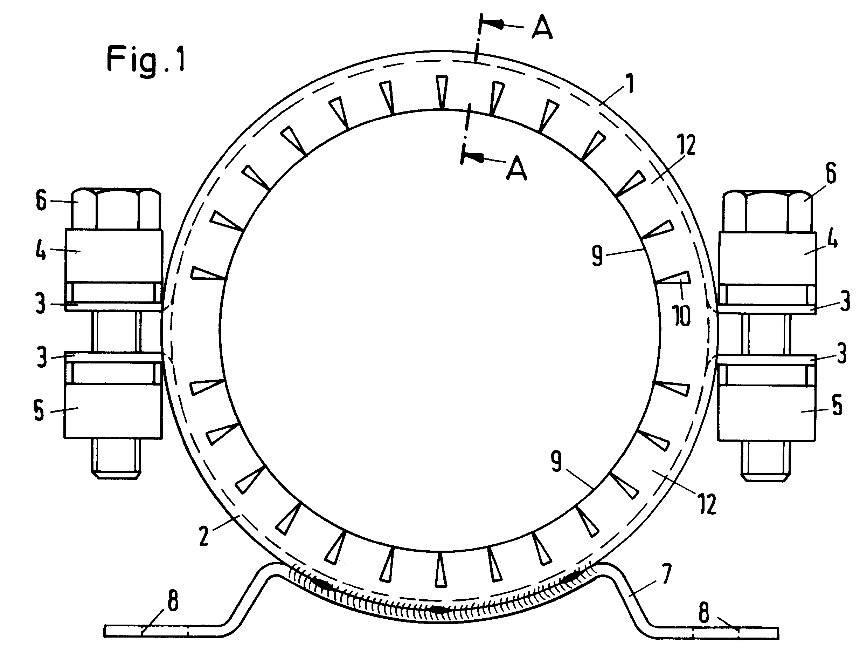

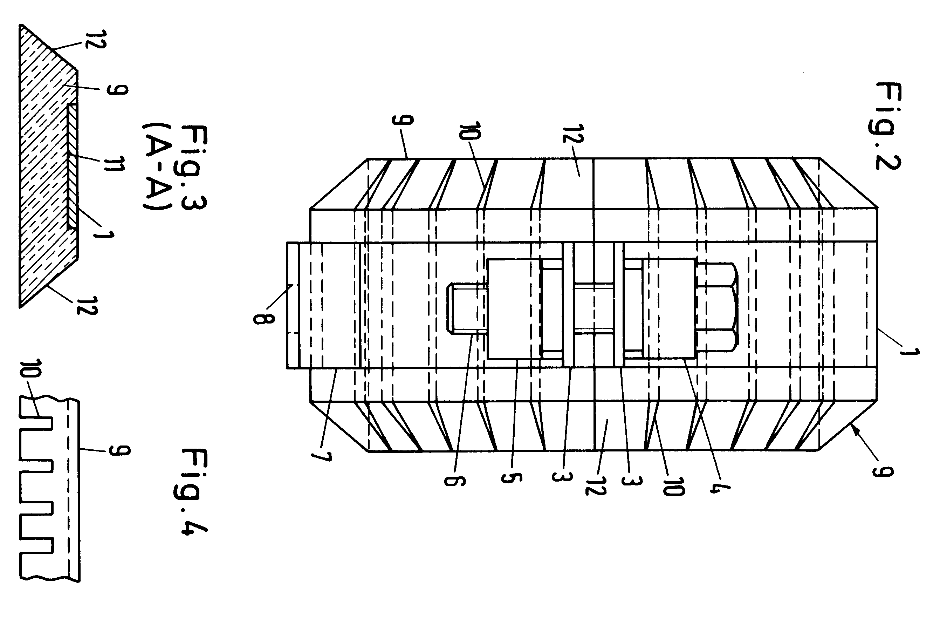

Die Rohrhalterungsschelle nach den Fig. 1 bis 3 besteht aus zwei Halbschellen 1 und 2 mit an den Enden radial abgewinkelten Spannbacken 3, die Löcher mit eingenieteten Buchsen 4 und 5 aufweisen, durch die Spannschrauben 6 hindurchgeführt sind. An der Außenseite der Halbschelle 2 ist eine Konsole 7 angeschweißt, die Löcher 8 zur Durchführung von Befestigungsschrauber aufweist.

Die Rohrhalterungsschelle ist mit zwei gummielastischen Einlagen 9 aus einem wärmedämmenden Kork-Gummi-Gemisch ausgekleidet, deren Form. jeweils etwa halbkreisförmig ist. Das Kork-Gummi-Gemisch hat eine Wärmeleitfähigkeit von nur etwa 0,03 W/m x °K.

Die Einlage 9 hat auf ihrer radial inneren Seite axial durchgehende Nuten 10 in gleichmäßigen Abständen mit einer radialen Tiefe vor. wenigstens einem Drittel der Dicke, hier etwas mehr als der halben Dicke, der Einlage 9. Tm dargestellten Ausführungsbeispiel beträgt der Innendurchmesser der Einlage 9 etwa 159 mm, die radiale Tiefe der Nuten 10 etwa 7,5 mm, die Weite der Nuten 10 in der langgestreckten Form der Einlage 9 nach Fig. 4 etwa 2,5 mm und die Nutenteilung etwa 10 mm bei einer radialen Dicke der Einlage 9 von etwa 14 mm.

Auf der radial äußeren Seite hat die Einlage 9 eine umlaufende Nut 11, in der das Schellenband eingeklebt ist, z.B. mittels einer beidseitig klebenden Folie.

Über die Umfangsränder der Halbschellen 1, 2 vorstehende Randabschnitte 12 sind konisch abgeschrägt, so daß sie mit der Axialrichtung einen Winkel von etwa 40° einschließen, wobei die Dicke der Randabschnitte zu den Umfangsrändern der Einlage hin und radial nach innen abnimmt.

**Patentansprüche**

1. Rohrhalterungsschelle mit einer gummielastischen Einlage (9) aus wärmedämmendem Material, wobei die Einlage (9) auf ihrer der Rohrhalterungsschelle (1, 2) in der Einbaulage abgekehrten Innenseite axial durchgehende Nuten (10) aufweist, deren Tiefe wenigstens einem Drittel der Dicke der Einlage (9) entspricht, **dadurch gekennzeichnet,** daß die Einlage (9) breiter als die Rohrhalterungsschelle (1, 2) ist, daß die Dicke von in der Einbaulage axial außerhalb des Randes der Rohrhaltungsschelle (1, 2) liegenden Randabschnitten (12) der Einlage (9) in der Einbaulage zu den Umfangsrändern der Einlage (9) hin und radial nach innen abnimmt und daß das Material der Einlage (9) ein Gemisch aus Kork und Gummi aufweist.

**Claims**

1. A pipe holding clip having an elastic insert (9) of heat-insulating material, wherein on its inside which in the position of installation is remote from the pipe holding clip (1, 2) the insert (9) has grooves (10) which extend axially therethrough and the depth of which corresponds at least to a third of the thickness of the insert (9), characterised in that the insert (9) is wider than the pipe holding clip (1, 2), that the thickness of edge portions (12) of the insert (9), which in the position of installation lie axially outside the edge of the pipe holding clip (1, 2), decreases radially inwardly and towards the peripheral edges of the insert (9) in the position of installation, and that the material of the insert (9) comprises a mixture of cork and rubber.

**Revendications**

Collier de serrage de tuyau comprenant une garniture (9) de caoutchouc élastique constituée en un matériau thermiquememt isolant, la garniture (9) comprenant, sur sa face intérieure opposée au collier de serrage de tuyau (12) dans la position de montage, des rainures (10) continues s'étendant axialement dont la profondeur correspond au moins au tiers de l'épaisseur de la garniture (9), caractérisé en ce que la garniture (9) est plus large que le collier de serrage de tuyau (1, 2), en ce que dans la position de montage l'épaisseur des sections marginales (12) de la garniture (9) s'étendant en position de montage axialement à l'extérieur du bord du collier de serrage de tuyau (1, 2) va en s'amincissant en direction des bords périphériques de la garniture (9) et radialement vers l'intérieur, et en ce que le matériau de la garniture (9) comporte un mélange de liège et de caoutchouc.

Fig.1

Fig.2

1

9

4

10

3

12

12

3

12

5

10

6

9

7

8

Fig.3
(A-A)

12    9    11    1    12

Fig.4

9

10